# EUROPEAN PATENT SPECIFICATION

(11) **EP 4 215 881 B1**
(45) Date of publication and mention of the grant of the patent: **17.09.2025**
(21) Application number: 23150898.7
(22) Date of filing: 10.01.2023
(51) Int. Cl.: G01F 11/02, B65B 3/32, B65B 55/14, G01F 15/00, B65B 63/08

(54) **APPARATUS FOR DELIVERING A PRODUCT HEATED TO A SERVICE TEMPERATURE**
VORRICHTUNG UND VERFAHREN ZUR ABGABE EINES AUF EINE BETRIEBSTEMPERATUR ERWÄRMTEN PRODUKTES
DISPOSITIF ET PROCÉDÉ DE DISTRIBUTION D'UN PRODUIT CHAUFFÉ À UNE TEMPÉRATURE DE SERVICE

(30) Priority: 19.01.2022 IT 202200000827
(43) Date of publication of application: 26.07.2023
(73) Proprietor: Garsi, Davide, 42020 Quattro Castella (RE) (IT)
(72) Inventor: Garsi, Davide, 42020 Quattro Castella (RE) (IT)
(74) Representative: Corradini, Corrado

(56) References cited:
- WO-A1-2021/058312
- FR-A- 1 019 297
- US-A- 3 349 964
- US-A1- 2007 175 334
- US-A1- 2010 024 658
- US-A1- 2019 082 881

## Description

### TECHNICAL FIELD

The present invention concerns the field of the treatment of products for introducing them into a target container intended for the consumption or marketing of the product.

In particular, the present invention concerns a delivery apparatus configured to deliver into a target container a dosed amount heated to a predetermined temperature of a product, particularly a fluid product, such as for example edible products, cosmetic products, chemical/pharmaceutical products.

### PRIOR ART

In the field of the treatment of products, particularly fluid products (i.e. products in the liquid and/or semi-liquid state), such as for example edible products or cosmetic products or chemical/pharmaceutical products, systems are known that allow the product to be heated up to a service temperature so as to sterilize it and/or in any case deliver it at such service temperature in a target container, which can be a container intended for the substantially immediate consumption of the product or a packaging container for subsequent sale.

For example, document FR1019297A describes a device for automatic dosing of water for infusions such as coffee, tea and the like.

These known systems envisage, first of all, the presence of a source tank inside which the product is contained.

The source tank is connected by means of one or more connection ducts to a dosing and delivery unit which is provided with a dosing tank inside which it receives a dosed amount of the product so as to subsequently deliver said dosed amount into the container.

In such known systems, the product can be heated to the service temperature in two different modes.

The first mode involves heating the product inside the source tank and then sending the product heated to the service temperature along the connection duct and then to the dosing and delivery unit thereof.

The second mode involves heating the product to the service temperature along the one or more ducts that connect the source tank to the dosing and delivery unit.

These known techniques, however, present drawbacks.

The first mode, in fact, is quite expensive as it involves heating the entire amount of product contained in the source tank, making the timings very long and the consumption of energy or gas for heating, and thus the associated costs, rather high.

Furthermore, the product heated in the source tank can at least partially disperse the heat before reaching the dosing and delivery unit, and consequently be delivered at a temperature lower than the expected service temperature.

Still, in this first mode, in the event of system shutdown and/or some malfunction of the same that involves a shutdown time, the product possibly present inside the one or more connection ducts and/or inside the dosing tank cools down and upon resumption of operation is delivered at a temperature different from the desired service temperature.

Likewise, in the second mode, the product can at least partially disperse the heat before being delivered, for example during the time the dosed amount thereof lie in the dosing and delivery unit, and therefore be subsequently delivered at a temperature lower than the expected service temperature.

Furthermore, even in this second mode, in the event of system shutdown and/or some malfunction of the same that involves a shutdown time, the product present inside the dosing and delivery unit, during this shutdown time cools down and, upon resumption of operation, is delivered at a temperature different from the desired service temperature.

An object of the present invention is, therefore, to solve said drawbacks of the prior art.

A further object is to achieve such objectives in the context of a rational, effective and affordable solution.

These objects are achieved by the features of the invention set forth in the independent claim. The dependent claims outline preferred and/or particularly advantageous aspects of the invention.

### DISCLOSURE OF THE INVENTION

In particular, the invention makes available a unit for dosing and delivering a product (fluid, particularly in the liquid or semi-liquid state), comprising:
- a dosing tank adapted to contain a dosed amount of a product, the dosing tank being adapted to be connected to a source tank containing an amount of product greater than the dosed amount contained in the dosing tank,
- filling means associated with the dosing tank and configured to fill the tank with said dosed amount of product,
- delivery means associated with the tank and configured to deliver the dosed amount of product contained within the dosing tank,
- means for heating the dosed amount of product contained within the dosing tank.

Thanks to this solution, the invention makes available a dosing and delivery unit that allows heating from time to time only the dosed amount of product that must subsequently be delivered inside a service container (i.e. a container for the immediate consumption of the product) or packaging, allowing to minimize the resources necessary for heating (i.e. gas or electricity), thus minimizing operating costs.

In addition, once heated to the service temperature, the product is directly delivered eliminating dwell times that might lead to an at least partial cooling of the product.

Again, thanks to this solution, in case of interruption of the service of the dosing and delivery unit, the product that is inside the dosing tank, upon resumption of operation, can be heated again so as to be returned to the service temperature before being delivered.

A further aspect of the invention provides that said heating means can be configured to heat the dosed amount of product by Joule effect.

In other words said heating means are configured to realize an ohmic type heating.

Thanks to this solution, the dosing and delivery unit is configured to heat the product in a particularly fast way, thus allowing to speed up the operations overall and increase hourly productivity.

This particular heating methodology is, in fact, considerably faster than the other known methodologies, for example with respect to heating by conduction or convection.

Yet another aspect of the invention provides that said filling means and said delivery means comprise a piston slidingly inserted inside the dosing tank and movable from a filling position wherein said dosed amount of product is allowed to enter inside the dosing tank through a filling mouth thereof, towards (and into) a delivery position wherein said dosed amount of product is pushed out of the dosing tank through a delivery mouth thereof.

Thanks to this solution, the construction structure of the dosing and delivery unit is particularly simple, quickly assembleable, and consists of a minimum number of components that therefore allows to minimize the ordinary maintenance necessary.

In particular, the piston can be slidingly inserted inside the dosing tank and movable from a filling position wherein it opens the filling mouth by means of which the dosing tank is in product communication with the source tank so that said dosed amount of product is allowed to enter inside the dosing tank, towards (and into) the delivery position so that the dosed amount is pushed out of the dosing tank through the delivery mouth, and occludes the filling mouth and the delivery mouth such that the entire dosed amount of product P is pushed outside (the delivery mouth being for example made available by the filling mouth).

In addition, the dosing and delivery unit is thus provided with a dosing and delivery system that is particularly robust and reliable, as well as precise, which allows obtaining a high repeatability of the operations.

A further aspect of the invention provides that said heating means may comprise:
- an electrical power supply,
- a first electrode connected to a first power supply pole of the electrical power supply,
- a second electrode connected to a second power supply pole of the electrical power supply,
wherein the first electrode and the second electrode are associated with the dosing tank so that the dosed amount of product is interposed between and in contact with the first electrode and the second electrode.

Thanks to this solution, the heating means are configured to heat the product in a particularly precise and fast way.

In particular, the first electrode and the second electrode are in electrical connection only through the (fluid) product and define with it a closed electrical circuit.

In other words, the product (is electrically conductive and) defines an electrical resistance interposed between the first electrode and the second electrode which is traversed by a current flowing from the first electrode towards the second electrode causing the resistance, that is the product, to heat up.

Thanks to this, the invention makes it possible, by applying a suitable electrical potential difference between the first electrode and the second electrode (imparted by the electrical power supply through the power supply poles, i.e. a suitable voltage value) for a suitable period of time, to effectively, quickly and particularly precisely heat the dosed amount of product to a desired service temperature.

In particular, the electrical resistance that defines the product depends on the amount thereof.

It should be thus noted that as to the dosed amount of product contained within the dosing tank it is therefore possible to heat the same to the service temperature in a fast and particularly precise manner.

Still, a further aspect of the invention provides that the first electrode may comprise the piston, the piston being made of an electrically conductive material, and that the second electrode may comprise a wall of the dosing tank made of an electrically conductive material.

Thanks to this solution, the construction architecture is particularly simple and effective. In fact, the dosing and delivery unit according to the invention makes it possible to exploit the same element both as a filling/delivery means and as an electrode.

Another aspect of the invention provides that the first electrode and the second electrode may each comprise a respective wall of the dosing tank, said respective walls being made of an electrically conductive material.

Thanks to this solution, the dosing and delivery unit is as a whole made up of a minimum number of elements, reducing the ordinary and extraordinary maintenance required.

Moreover, thanks to this solution, the heating of the dosed amount of product to the service temperature is particularly effective, since this is certainly always interposed between two walls of the dosing tank.

Still, it is possible to provide that the first electrode and the second electrode may each comprise a respective portion of a wall of the dosing tank (said respective portions being made of an electrically conductive material and furthermore electrically separated by portions made of an electrically insulating material).

Yet another aspect of the invention provides that the one dosing and delivery unit may comprise an electronic control unit operatively connected to the filling means, the delivery means and the heating means and configured to operate them.

Thanks to this solution, the operation of the dosing and delivery unit is automated, and the operations thereof are reliable and repeatable.

The invention further makes available an apparatus for delivering a product (fluid, particularly in the liquid or semi-liquid state) comprising:
- a source tank containing the product,
- a dosing and delivery unit according to one or more of the aspects highlighted above which is connected to the source tank.

Thanks to this solution, the invention makes available an apparatus for delivering a product that allows to minimize the dwell timing of the product once it has been heated inside the apparatus, obviating the possibility that this can at least cool down with respect to the desired service temperature at which it has been previously heated before being delivered.

In addition, this apparatus makes it possible to obviate the possibility that in the event of a momentary interruption of operation, upon resumption of operations the dosed amount of product is delivered at a temperature different from the desired service temperature.

In fact, upon resumption of operations, the dosed amount of product can be reheated to the desired service temperature before being delivered.

The invention again makes available a method of delivering a dosed amount of a product (fluid, particularly in the liquid or semi-liquid state) at a service temperature comprising:
- having available a source tank of the product,
- having available a dosing tank connected to the source tank,
- filling the dosing tank with a dosed amount of product taken from the source tank (said dosed amount of product being lower than the amount of product contained in the source tank),
- heating the dosed amount of product inside the dosing tank up to a service temperature,
- delivering the dosed amount of product heated to the service temperature contained within the dosing tank.

Thanks to this solution, the invention makes available a method that allows heating from time to time only the dosed amount of product that must subsequently be delivered into a service container (i.e. a container for the immediate consumption of the product) or packaging, allowing to minimize the resources necessary for heating (i.e. gas or electricity), thus minimizing heating costs.

In addition, once heated to the service temperature, the product is directly delivered eliminating dwell times that might lead to an at least partial cooling of the product.

### BRIEF DESCRIPTION OF THE DRAWINGS

Further features and advantages of the invention will be more apparent after reading the following description provided by way of a non-limiting example, with the aid of the Figures illustrated in the accompanying tables.
Figure 1 is a schematic view of an embodiment of a delivery apparatus according to the invention wherein a first electrode comprises a piston and a second electrode comprises a wall of a dosing tank.
Figure 2 is a schematic view of an alternative embodiment of a delivery apparatus according to the invention wherein a first electrode and a second electrode each comprise a respective side wall of a dosing tank.
Figure 3 is a schematic view of the delivery apparatus of Figure 2 with a piston in a filling position.
Figure 4 is a schematic view of the delivery apparatus of Figure 2 with the piston in a delivery position.
Figure 5 is a view of a further embodiment of a delivery apparatus according to the invention wherein a first electrode comprises a sliding jacket of a piston and wherein a second electrode comprises a side wall of a dosing tank.

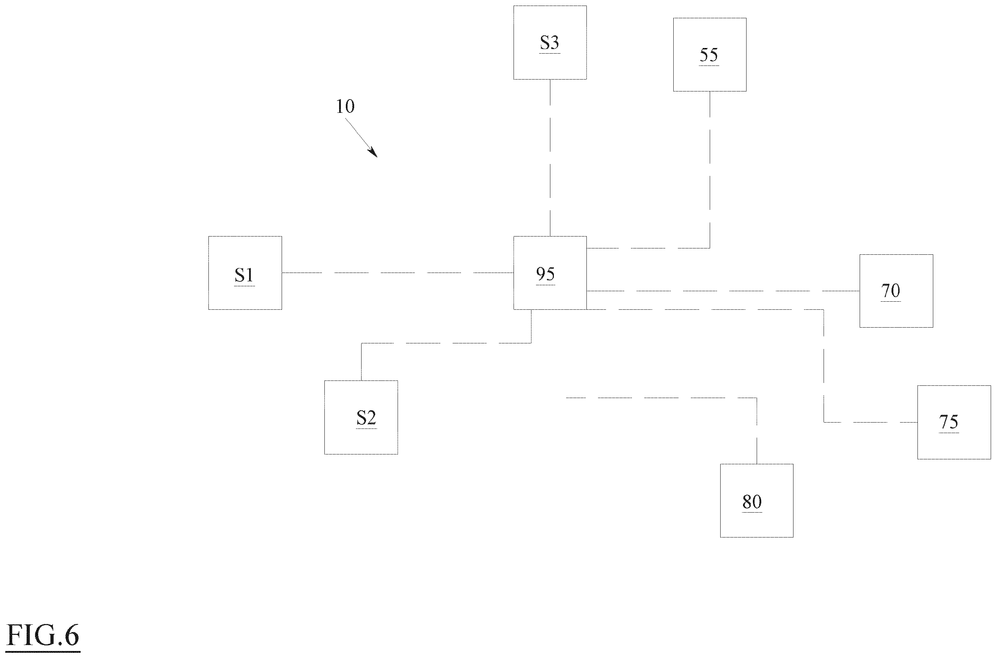

Figure 6 is a schematic block view of the delivery apparatuses of Figures 1-5.

### BEST MODE OF THE INVENTION

With particular reference to such Figures, an apparatus for delivering a product P, particularly a fluid product (for example of organic or synthetic origin), has been indicated overall with reference 10.

More precisely, by product P we mean (fluid) products in the liquid or semi-liquid or gel state.

For example, the product P may also comprise a solid component immersed in a liquid component.

In particular with product P, it is meant an edible (fluid) product, such as for example jam or marmalade or fruit juice or tomato sauce or minestrone, or a cosmetic or personal care product, such as for example bath foam or shampoo or body care creams and the like, or a chemical/pharmaceutical product, such as for example an antiinflammatory cream.

In particular, as will appear better hereinafter, the delivery apparatus 10 is overall configured to, at each delivery cycle, heat a dosed amount of said product P to a (predetermined) service temperature, for example comprised between 60°C and 99°C, and deliver said dosed amount of product P (heated to the service temperature).

In particular, such heating may be such that the product P is delivered at a desired service temperature for the substantially immediate consumption of the product P, or, it may be such that the product P is heated to a service temperature such that it sterilizes the product P (i.e. kills and/or otherwise prevents the replication of viruses and/or bacteria and/or spores) so as to extend a shelf life thereof.

The delivery apparatus 10 comprises first of all a source tank 15 adapted to contain the product P, i.e. defining a containment compartment within which the product P is received, particularly an amount of product P greater than the dosed amount of product P which is heated and delivered at each delivery cycle.

The product P inside the source tank 15 is at a storage temperature which is lower than the service temperature.

The source tank 15 can be adapted to contain an amount of product P for example comprised between 10 Kg (kilograms) or litres and 200 Kg.

The source tank 15 has an outlet mouth 15A, for example obtained in a bottom wall thereof, through which the product P is adapted to exit therefrom.

The delivery apparatus 10 then comprises a unit for dosing and delivering 20 a product P.

Said dosing and delivery unit 20 is configured, as will appear better hereinafter, so as to (at each delivery cycle) take (an amount of product P equal to) said dosed amount of product P from the source tank 15, heat the dosed amount to the service temperature and, subsequently, deliver the dosed amount of product P (heated to the service temperature) inside a target container 25.

In particular, said target container 25 can be a container 25 intended for the (substantially) immediate consumption of the product P, i.e. a container 25 directly intended for a consumer of the product P, or it can be a packaging container 25 intended for a point of sale for a subsequent purchase of the product P by a consumer.

The dosing and delivery unit 20 comprises, first of all, a dosing tank 30 adapted to receive (from the source tank 15) and to contain said dosed amount of a product P.

For example said dosed amount of product may be comprised between 0.01 Kg and 5 Kg.

In other words, the dosing tank 30 defines a containment compartment within which said dosed amount of the product P is adapted to be received.

The dosing tank 30 is connected to the source tank 15 so as to receive said dosed amount of product P (at each delivery cycle) therefrom.

In particular, the dosing tank 30 has a filling mouth 35 placed in communication of product P with the outlet mouth 15A of the source tank 15.

For example, the dosing and delivery unit 20 may comprise a crossing chamber 40 interposed between the source tank 15 and the dosing tank 30 to place the same in communication of product P.

The crossing chamber 40 defines a passage channel for the product P that reaches the dosing tank 30 from the source tank 15.

In particular, the crossing chamber 40 is provided with an inlet mouth 40A connected (sealingly), for example by means of a first connection pipe 45, to the source tank 15.

In particular, said first connection pipe 45 defines a sliding channel for the product P, and is provided with an inlet sealingly connected to the outlet mouth 15A of the source tank 15, and with an outlet sealingly connected to the inlet mouth 40A of the crossing chamber 40.

It is not excluded that, in other embodiments not illustrated, the inlet mouth 40A of the crossing chamber 40 can be directly sealingly connected to the outlet mouth of the source tank 15.

Furthermore, it is not excluded that in alternative embodiments not illustrated such a first connection pipe 45 can be adapted to connect the outlet mouth 15A with the filling mouth 35 (in the absence of the crossing chamber 40), i.e. that it can be provided with an inlet sealingly connected to the outlet mouth 15A of the source tank 15, and with an outlet sealingly connected to the filling mouth 35 of the dosing tank 30.

Furthermore, the crossing chamber 40 has a communication mouth 40B sealingly connected to the filling mouth 35 of the dosing tank 30, for example by means of a second connection pipe 50.

In particular, said second connection pipe 50 defines a sliding channel for the product P, and said second connection pipe 50 is provided with a respective inlet sealingly connected to the communication mouth 40B of the crossing chamber 40 and with a respective outlet sealingly connected to the filling mouth 35 of the dosing tank 30.

It is not excluded that, in other embodiments not illustrated, the communication mouth 40B can be directly sealingly connected to the filling mouth 35 of the dosing tank 30.

The product P, therefore, exits from the source tank 15 through the outlet mouth 15A thereof, passes through the first connection pipe 45 (where present), enters the crossing chamber 40 (where present) through the inlet mouth of the crossing chamber 40, passes through the crossing chamber 40, exits from the crossing chamber 40 (where present) through the communication mouth, passes through the second connection pipe 50 (where present), and enters the dosing tank 30 through the filling mouth 35 thereof.

The dosing tank 30 then comprises a delivery mouth through which the dosed amount of product P is adapted to exit from the dosing tank 30 itself.

For example, said delivery mouth is made available by the filling mouth 35 itself. However, it is not excluded that in other illustrated embodiments the filling mouth 35 and the delivery mouth can be distinguished from each other.

The dosing and delivery unit 20 still comprises filling means associated with the dosing tank 30 and configured to fill the dosing tank 30 with said dosed amount of product P (at each delivery cycle).

Said filling means comprise, for example, a so-called piston dosing device 55.

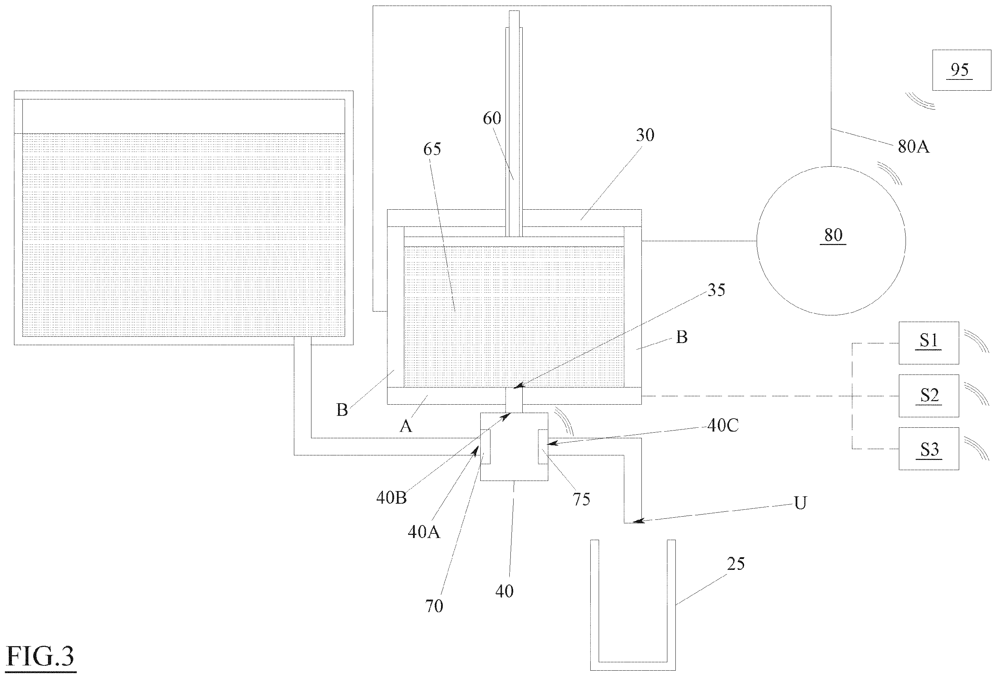

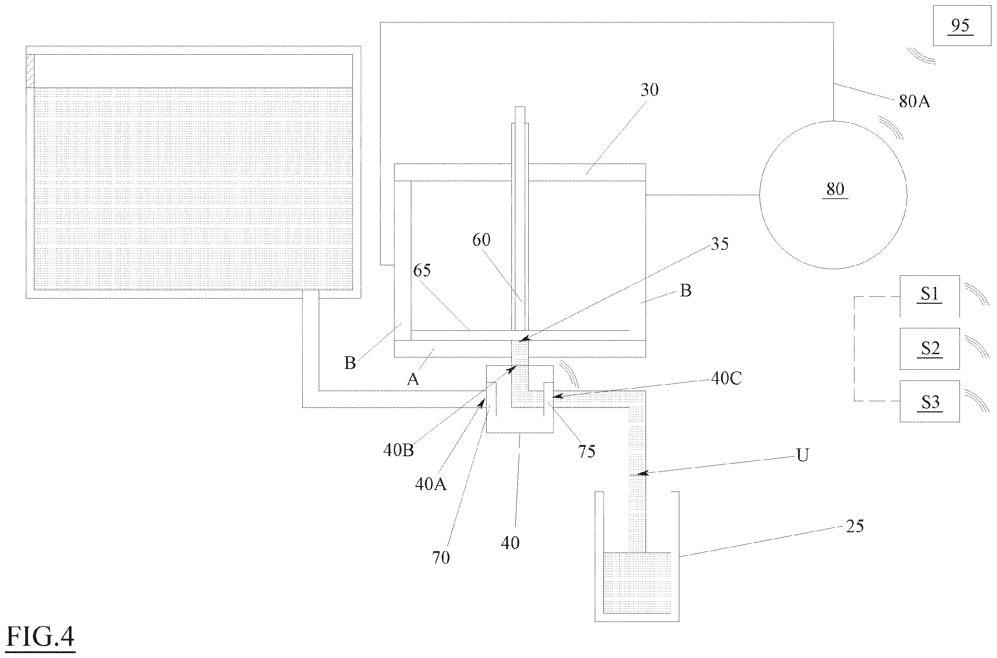

The piston 55 is, in detail, slidingly inserted inside the dosing tank 30 and movable from a filling position (visible in Figure 3) wherein it opens the filling mouth 35, through which the dosing tank 30 is in communication of product P with the source tank 15, so that said dosed amount of product P is allowed to enter inside the dosing tank 30, towards (and into) a delivery position (visible in Figure 4) wherein it occludes the filling mouth 35 of the dosing tank 30 (and vice versa, i.e. from the delivery position towards and into the filling position).

In practice, said filling means comprise a piston 55 provided with a cylinder, not visible in the Figures and preferably arranged externally to the dosing tank, and with a stem 60 movable with respect to the cylinder, in both directions along a direction of movement, arranged inside the dosing tank 30.

In particular, the stem 60 can be inserted inside the dosing tank 30 by means of an opening made in a (upper) wall thereof, preferably in a position opposed to the filling mouth 35.

The stem 60 is, in particular, movable within the dosing tank 30 towards/away from the filling mouth 35 (and the delivery mouth) of the dosing tank 30.

In particular, the piston 55 comprises a pad 65 which is connected and fixed (rigidly fixed, i.e. preferably fixed without degrees of residual freedom) to an end (lower one in the Figures) of the stem 60.

The pad 65 is integral in movement to the stem 60 of the piston 55 towards/away from the filling mouth 35 (and the delivery mouth).

In particular, the pad 65 may have a transversal development equal to the transversal development of the dosing tank 30.

In other words, the pad 65 can be inserted inside the dosing tank 30 so that a perimeter edge thereof is in complete contact with a side wall B (in the case of cylindrical-shaped tank, or with all the side walls B in the case of polygonally-shaped dosing tank) of the dosing tank 30.

Still, the pad 65 may have an equal shape and dimensions (at least) equal to the shape and dimensions of a cross-section of the dosing tank 30.

For example, if the dosing tank 30 has a cylindrical shape, then the pad 65 itself may also have a cylindrical shape with radius (at least) equal to the radius of the cylinder defined by the tank.

In practice, the pad 65 divides the containment compartment of the dosing tank 30 into two chambers whose communication of product P is prevented by the pad 65 itself.

The stem 60 of the piston 55, by moving between the filling position and the delivery position moves the pad 65.

In particular, in the filling position the pad 65 is distal from the filling mouth 35, and it therefore does not occlude the same, allowing the dosed amount of product P to enter the dosing tank 30.

In the delivery position, the pad 65 is proximal to the filling mouth 35 and it occludes the same (and prevents the product P from entering the dosing tank 30).

Said filling means, for example, may further comprise a first valve 70 adapted to selectively place the source tank 15 and the dosing tank 30 in communication of product P.

Said first valve 70 is associated with one between the outlet mouth 15A of the source tank 15, the inlet mouth 40A of the crossing chamber 40, the communication mouth 40B of the crossing chamber 40, the filling mouth 35 of the dosing tank 30.

For example, said first valve 70 is associated with the inlet mouth 40A of the crossing chamber 40 and configured to selectively open or close the same.

In practice, said first valve 70 comprises a valve body, for example sealingly connected to the inlet mouth 40A of the crossing chamber 40, and defining a passage duct for the product P, and a shutter, for example of mechanical type, movable inside the passage duct so as to selectively open or close the passage duct defined by the valve body.

The first valve 70 is then operable between an opening configuration, wherein it places the source tank 15 and the dosing tank 30 in communication of product P (for example allowing the product P, which flows from the source tank 15 towards the dosing tank 30, to reach the crossing chamber 40 and therefore the dosing tank 30), and a closing configuration in which it prevents the communication of product P between the source tank 15 and the dosing tank 30 (for example preventing the product P from entering the crossing chamber 40).

It is not excluded that, in alternative embodiments, said filling means may comprise an injection pump provided with a suction connected to the source tank 15 so as to suck said dosed amount of product P therefrom, and with a delivery connected to the dosing tank 30 so as to inject therein said dosed amount of product P taken from the source tank 15.

The dosing and delivery unit 20 still comprises delivery means associated with the dosing tank 30 and configured to deliver the dosed amount of product P contained within the dosing tank 30.

For example, said delivery means comprise, first of all, the so-called piston dosing device, i.e. the piston 55.

In particular, the piston 55 by moving from the filling position towards (and into) the delivery position pushes the dosed amount of product P contained within the tank out of the same through the delivery mouth, which in the illustrated embodiment is made available by the filling mouth 35 itself, until it is arranged in the delivery position where it occludes the delivery mouth so that the entire dosed amount of product P is pushed out of the dosing tank 30.

In particular, the movable stem 60 by moving from the filling position towards (and into) the delivery position moves the pad 65 which pushes the product P out of the dosing tank 30 through the delivery mouth, for example made available by the filling mouth 35. The piston 55 is, thus, slidingly inserted into the dosing tank 30 and movable from the filling position wherein said dosed amount of product P is allowed to enter inside the dosing tank 30 through the filling mouth 35 thereof, towards (and into) the delivery position wherein it pushes the dosed amount of product P out of the dosing tank 30 through the delivery mouth 35 (for example made available by the filling mouth 35 itself).

The piston 55 is, thus, slidingly inserted inside the dosing tank 30 and movable from the filling position wherein it opens the filling mouth 35, through which the dosing tank 30 is in communication of product P with the source tank 15, so that said dosed amount of product P is allowed to enter inside the dosing tank 30, towards and into the delivery position wherein it occludes the filling mouth 35 of the dosing tank 30 and the delivery mouth (made available for example by the filling mouth 35 itself) so as to prevent further product from entering from the filling mouth 35 and the entire dosed amount of product P is pushed out of the dosing tank 30 through the delivery mouth.

Once the delivery position is reached, the pad 65 occludes (the filling mouth 35 and) the delivery mouth (made available for example by the filling mouth 35 itself).

The delivery means may further comprise a conveying tube terminating in a delivery nozzle U at which the target container 25 is arranged, connected to the delivery mouth (i.e. to the filling mouth 35) adapted to receive the dosed amount of product exiting the dosing tank 30 and to convey it towards and into the target container 25.

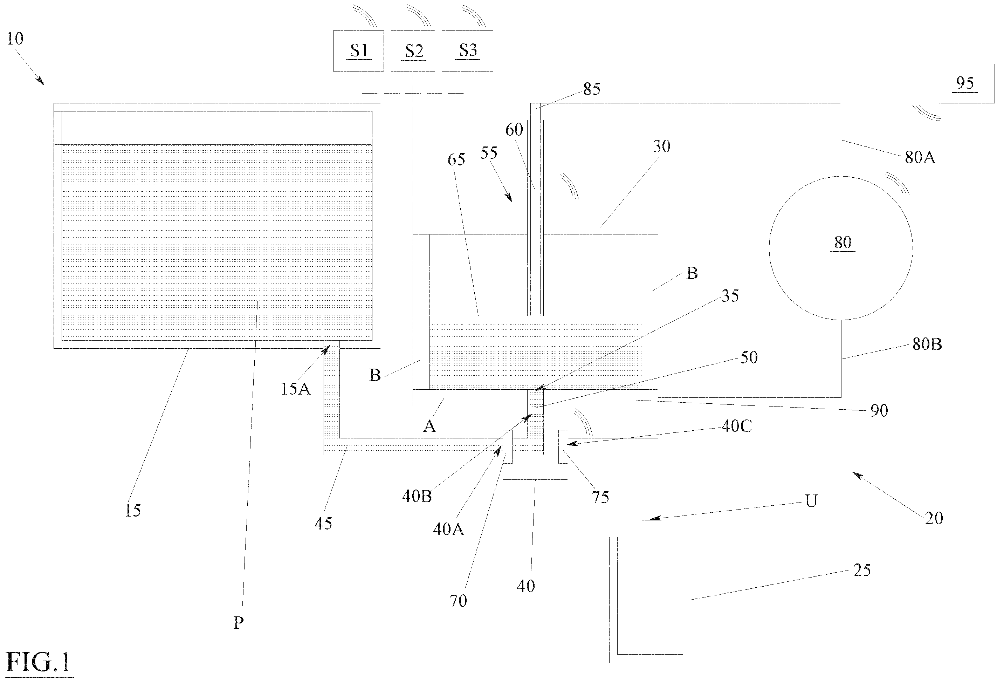

For example, as visible in Figures 1-5, the conveying tube is indirectly connected to the delivery mouth (i.e. to the filling mouth 35) by means of the crossing chamber 40.

In particular, the conveying tube is sealingly connected to a service mouth 40C made in the crossing chamber 40, through which the dosed amount of product P, exits from the crossing chamber 40 to reach the aforementioned target container 25.

It is not excluded that, in alternative embodiments not illustrated, the conveying tube can be directly sealingly connected to the delivery mouth of the dosing tank 30.

Still, said delivery means may, for example, comprise a second valve 75 adapted to selectively place the dosing tank 30 and the delivery nozzle U (i.e. the conveying tube) in communication of product P.

Said second valve is associated with one between the delivery mouth of the dosing tank 30 and the service mouth 40C of the crossing chamber 40 (where present).

For example, said second valve 75 is associated with the service mouth 40C of the crossing chamber 40 and is configured to selectively open or close the same.

In practice, said second valve 75 comprises a valve body, for example sealingly connected to the service mouth 40C of the crossing chamber 40, defining a respective passage duct for the dosed amount of product P, and a shutter, for example of mechanical type, movable inside the passage duct so as to selectively open or close the passage duct defined by the valve body.

The second valve 75 is thus operable between a respective opening configuration, wherein it places the dosing tank 30 in communication of product P with the delivery nozzle U (for example allowing the dosed amount of product P, which flows from the dosing tank 30 towards the delivery nozzle U, to reach the service mouth 40C of the crossing chamber 40 to exit therefrom), and a closing configuration wherein it prevents the communication of product P between the dosing tank 30 and the delivery nozzle U (for example preventing the dosed amount of product P from reaching the service mouth 40C and exiting from the crossing chamber 40 through it).

It is not excluded that, in alternative embodiments not illustrated, said delivery means may comprise an injection pump provided with a suction connected to the dosing tank 30 so as to suck said dosed amount of product P therefrom, and configured to inject said dosed amount of product P taken from the dosing tank 30 into the target container 25.

The dosed amount of product P, therefore, exits through the delivery mouth of the dosing tank 30, for example made available by the filling mouth 35 itself, passes through the second connection pipe 50 (where present), enters the crossing chamber 40 (where present) and exits through the service mouth 40C thereof, flows along the conveying tube and is delivered through the delivery nozzle U.

The dosing and delivery unit 20 still comprises means for heating the dosed amount of product P contained within the dosing tank 30.

In particular, said heating means are associated with the dosing tank 30 and configured to heat the dosed amount of product P therein.

That is, said heating means are configured to heat the dosed amount of product P when it is contained within the containment compartment defined by the dosing tank 30.

Preferably, said heating means are configured to heat the dosed amount of product P by Joule effect.

For example, said heating means comprise, first of all, an electrical power supply 80 (per se known to the person skilled in the art) adapted to be connected to an electrical power supply network (for example to the national power grid) and provided with a first electrical power supply pole 80A and with a second electrical power supply pole 80B.

The electrical power supply 80 is configured to receive electric current from the electrical power supply network and to drive (i.e. switch) said electric current so that between the first electrical power supply pole 80A and the second electrical power supply pole 80B it is defined an electrical potential difference (in Volts, i.e. a voltage) equal to a predetermined value (for example manually adjustable by means of a knob provided on the electrical power supply 80).

For example, the electrical power supply 80 may be configured to apply to the first electrical power supply pole 80A and to the second electrical power supply pole 80B a potential difference, i.e. a voltage (preferably an alternating voltage), preferably comprised between 100 V (Volt) and 3 KV (Kilovolt).

Furthermore, the electrical power supply 80 can be configured to apply to the first electrical power supply pole 80A and to the second electrical power supply pole 80B said potential difference, i.e. said voltage, at a frequency preferably comprised between 10 KHz (Kilohertz) and 100 (Kilohertz).

Said heating means then comprise a first electrode 85 adapted to be connected to the first electrical power supply pole 80A of the electrical power supply 80, and a second electrode 90 adapted to be connected to the second electrical power supply pole 80B of the electrical power supply 80.

Each electrode 85,90 is substantially defined by an electrically conductive, preferably metallic body or surface.

In other words, said electrodes are connected to the electrical power supply 80 so that a certain electrical potential difference is defined between them.

The first electrode 85 and the second electrode 90 are associated with the dosing tank 30 so that the dosed amount of product P is interposed between and in contact with the first electrode 85 and the second electrode 90.

In addition, the first electrode 85 and the second electrode 90 are associated with the dosing tank 30 so as to define a closed electrical circuit with the dosed amount of product P.

More precisely, the first electrode 85 and the second electrode 90 are associated with the dosing tank 30 so as to result in electrical communication between them only (exclusively) by means of the dosed amount of product P.

In other words, the product P (of the dosed amount contained within the dosing tank 30, is electrically conductive and) defines an electrical resistance interposed between the first electrode 85 and the second electrode 90 which, due to the electrical potential difference (i.e. to the electrical voltage) between the first electrode 85 and the second electrode 90, is crossed by an electric current flowing from the first electrode 85 towards the second electrode 90 causing the resistance or the dosed amount of product P contained within the dosing tank 30 to heat up.

Still, the first electrode 85 and the second electrode 90 are associated with the dosing tank 30 so that they are separated from each other, i.e. so as to prevent a direct contact between the first electrode 85 and the second electrode 90.

By applying this electrical potential difference (in Volts) between the first electrode 85 and the second electrode 90 (imparted by the electrical power supply 80 through the electrical power supply poles 80A, 80B) it is therefore possible to determine in an effective and particularly precise manner an amount (i.e. intensity, in amperes A) of current that crosses the product P, and by maintaining this potential difference for a suitable period of time, it is possible to heat the product P to the desired service temperature in a particularly precise manner.

In particular, the amount (intensity) of current crossing the product P is a function of the electrical resistance defined by the product P itself, and said electrical resistance depends on the amount thereof and on the type of product P (particularly on the resistivity and on the specific heat).

For example, as visible in an embodiment illustrated in Figure 1, the first electrode 85 may comprise the piston 55, i.e. the stem 60 and the pad 65, and said piston 55 is made of an electrically conductive material (e.g. of a metallic material), i.e. the stem 60 and the pad 65 connected thereto may be made of an electrically conductive, e.g. metallic material.

The second electrode 90 may comprise a wall of the dosing tank 30 made of electrically conductive material, for example of metallic material.

For example, as visible in Figure 1, said second electrode 90 may comprise a bottom wall A of the dosing tank 30 (and the other walls of the dosing tank 30 are made of an electrically insulating material, for example of a plastic, i.e. polymeric material).

For example, in such an embodiment, only the bottom wall A of the tank is made of an electrically conductive material, while all the other walls are made of an electrically insulating material.

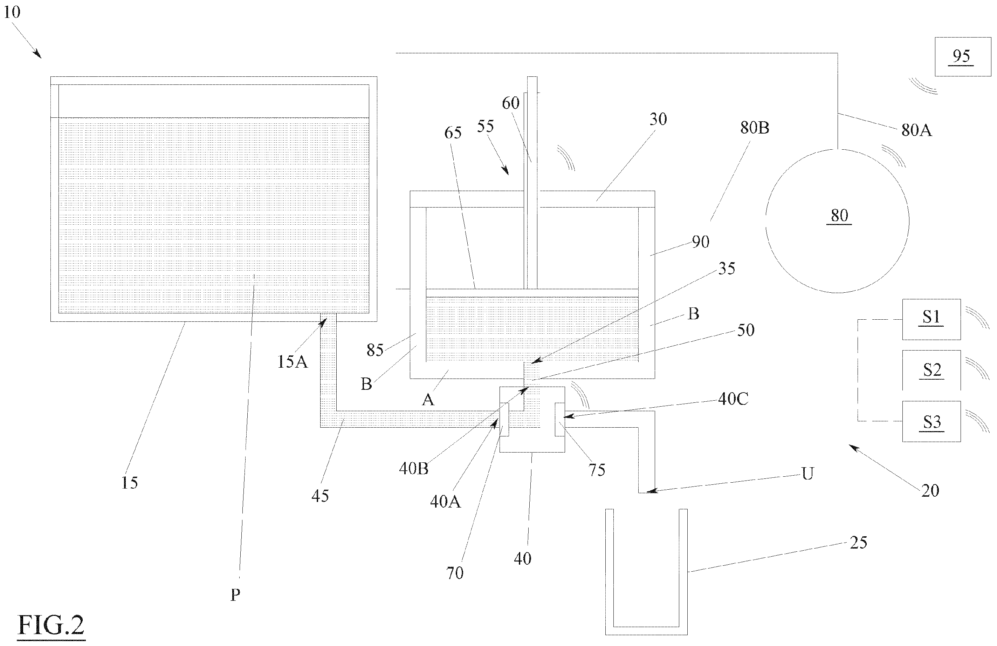

Alternatively, as visible in an alternative embodiment illustrated in Figure 2, the first electrode 85 and the second electrode 90 may each comprise a respective side wall B of the dosing tank 30, said side walls B being made of an electrically conductive material, for example metallic (and are further electrically separated from each other by other walls of the dosing tank 30 made of an electrically insulating material, for example of plastic).

In this case the pad 65 (and possibly also the stem 60) is made of an electrically insulating material, for example a plastic (i.e. polymeric) material.

In such an alternative embodiment, for example, only said two side walls B of the dosing tank 30 are made of an electrically conductive material, while all the other walls of the dosing tank 30 are made of an electrically insulating material.

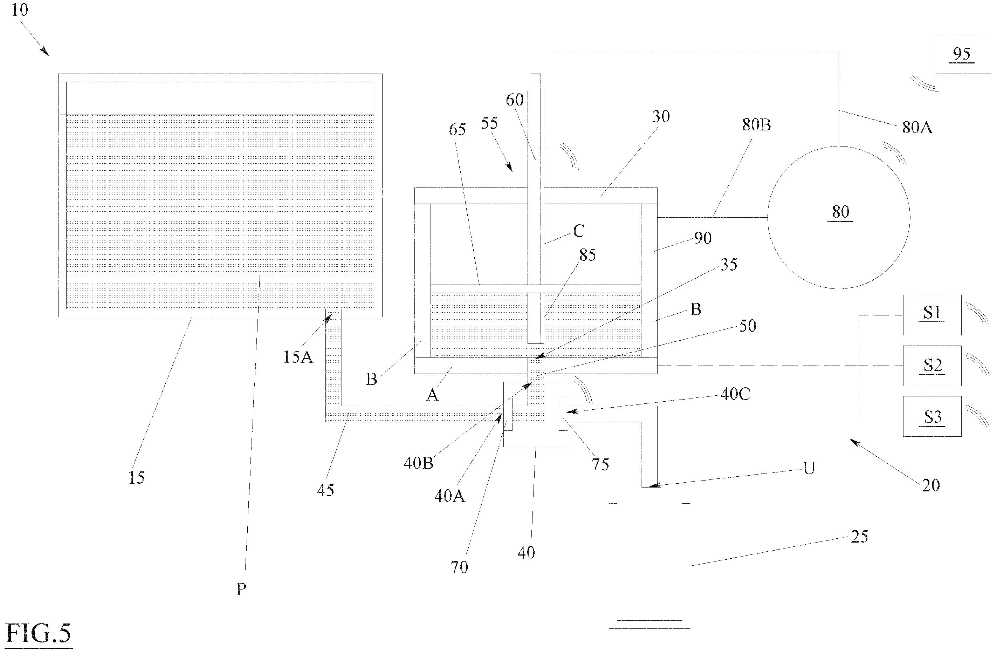

Alternatively, as visible in a further embodiment illustrated in Figure 5, the first electrode 85 may comprise a sliding jacket C of the piston 55 (inside which the stem 60 is slidingly inserted and movable between the filling position and the delivery position, with the stem 60 and the pad 65 being made of an electrically insulating material, for example a plastic, i.e. polymeric material) arranged inside the dosing tank 30 and made of an electrically conductive material (for example of a metallic material), and the second electrode 90 may comprise at least one side wall B of the dosing tank 30, particularly a cylindrical side wall B in the case where the dosing tank 30 has a cylindrical shape or two opposed side walls B in the case where the dosing tank has a polygonal shape (in section) (said side walls being mutually electrically separated from other walls of the dosing tank 30 made of an electrically insulating material, for example a plastic, i.e. polymeric material).

In this further embodiment, for example, only said sliding jacket C and only said cylindrical side wall B, or possibly said two opposed side walls B, are made of an electrically conductive material, while the other walls of the dosing tank 30, the stem 60 and the pad 65 are made of an electrically insulating material.

It is not excluded that, in alternative embodiments not illustrated, said heating means can be configured to heat the dosed amount of product P according to different techniques, for example by convection, in which case they could comprise a generator of a flow of hot air, or by conduction, in which case they could comprise a heating body arranged in contact with the dosing tank 30 so as to transfer heat thereto and therefore to the dosed amount of product P contained therein.

The dosing and delivery unit 20 may further comprise a first sensor S1 associated with the dosing tank 30 and configured to measure the temperature of the dosed amount of product P contained therein.

In particular, said first sensor S1 can be inserted inside the dosing tank 30 so as to be at least partially immersed (i.e. inserted) in the dosed amount of product P contained therein (before delivery).

The first sensor S1 is then configured to generate a signal indicative of the temperature of the dosed amount of product P, for example an electrical signal of variable amplitude in a manner proportional to the temperature of the dosed amount of product P.

The dosing and delivery unit 20 may further comprise a second sensor S2 associated with the dosing tank 30 and configured to measure the amount of product P contained therein.

In particular, said second sensor S2 is configured to generate a signal indicative of the amount of product P present in the dosing tank 30.

In particular, said second sensor S2 can be configured so as to generate a continuous signal of variable amplitude in a manner proportional to the amount of product P present inside the dosing tank 30.

For example, said second sensor S2 may comprise a load cell associated with a bottom wall A of the dosing tank 30 and adapted to generate a signal indicative of (i.e. of amplitude proportional to) the weight of the product P weighing down on the bottom wall A of said dosing tank 30.

The dosing and delivery unit 20 may further comprise a third sensor S3 (e.g. an Ohm-meter) configured to measure the electrical resistance defined by the dosed amount of product P interposed between the first electrode 85 and the second electrode 90.

In particular, said third sensor S3 is associated with the first electrode 85 and with the second electrode 90 and configured to generate a signal indicative of the resistance interposed therebetween, defined by the product P.

In particular, said second sensor S3 can be configured so as to generate a continuous signal of variable amplitude in a manner proportional to the electrical resistance interposed between the first electrode 85 and the second electrode 90.

The dosing and delivery unit 20 further comprises an electronic control unit 95 which is configured to manage (automatically and/or semi-automatically) the operation of the delivery unit 20 itself.

The electronic control unit 95 is, for example, of the type of a processor, preferably provided with a memory unit, in which a program that commands the operation of the delivery apparatus 10 is stored.

The electronic control unit 95 may also be provided with at least one clock and/or timing unit and/or timer.

The electronic control unit 95 may be operatively connected, by cables or by wireless technology (e.g. Wi-Fi or Bluetooth or LTE or other wireless communication technology), to each component of the delivery apparatus 10.

The electronic control unit 95 is operatively connected to the filling means, the delivery means and the heating means and configured to operate (and deactivate) them.

In particular, the electronic control unit 95 is operatively connected to the piston 55 and configured to operate the same to move between the filling position and the delivery position and vice versa.

Still, the electronic control unit 95 may be operatively connected to the first valve 70 (where present) so as to selectively operate the same between the opening configuration and the closing configuration.

Further, the electronic control unit 95 may be operatively connected to the second valve 75 so as to selectively operate the same between the respective opening configuration and the respective closing configuration.

The electronic control unit 95 is further operatively connected to the electrical power supply 80 and configured to operate the same so as to apply a certain potential difference between the first electrode 85 and the second electrode 90.

The electronic control unit 95 is still operatively connected to the first sensor S1 and configured to receive (and process) the signal generated by the same so as to detect the temperature of the dosed amount of product P inside the dosing tank 30.

Furthermore, the electronic control unit 95 can be operatively connected to the second sensor S2 and configured to receive (and process) the signal generated by the same so as to detect the amount of product P (i.e. the mass of the product P) present inside the dosing tank 30.

Still, the electronic control unit 95 may be operatively connected to the third sensor S3 and configured to receive (and process) the signal generated by the same so as to detect the electrical resistance defined by the dosed amount of product P present within the dosing tank 30 and interposed between the first electrode 85 and the second electrode 90.

The electronic control unit 95 may in particular be configured to regulate the operation of the delivery apparatus 10 as follows.

First of all, the electronic control unit 95 may be configured to operate the first valve 70 in the respective opening configuration and, concurrently (i.e. substantially simultaneously), operate the second valve 75 in the respective closing configuration.

The electronic control unit 95 may then be configured to operate the piston 55 from the delivery position towards (and into) the filling position.

Concurrently with the movement of the piston 55, the electronic control unit 95 can be configured to monitor the signal generated by the second sensor S2, so as to detect the amount of product P present in the dosing tank 30.

The electronic control unit 95 may then be configured to compare the detected amount with a dosed amount (predetermined and preset or settable in the memory unit of the electronic control unit 95).

If, the detected amount is equal to the dosed amount (then the piston 55 has reached the filling position and) the electronic control unit 95 is configured to terminate the actuation of the piston 55.

In particular, the movement of the piston 55, i.e. of the stem and of the pad, from the delivery position towards and into the filling position causes a depression that recalls said dosed amount of product P inside the dosing tank 30.

Subsequently, i.e. once the amount of product P inside the housing tank is equal to the dosed amount, the electronic control unit 95 is configured to operate the first valve 70 in the respective closing configuration.

Still, subsequently, the electronic control unit 95 is configured to operate the electrical power supply 80 so as to apply an electrical potential difference (predetermined and preset or settable in the memory unit of the electronic control unit 95 or calculated by the electronic control unit 95 itself) between the first electrode 85 and the second electrode 90 (i.e. so as to apply a predetermined and preset or settable voltage value in the memory unit of the electronic control unit 95 or calculated by the electronic control unit 95 itself), so as to define an electric current flowing from the first electrode 85 to the second electrode 90 through the dosed amount of product P by heating the same by Joule effect.

In particular, the electronic control unit 95 may be configured to operate the electrical power supply 80 for a period of time (predetermined and preset or settable in the memory unit of the electronic control unit 95 or calculated by the electronic control unit 95 itself).

For example, said period of time may be comprised between 1 second and 60 seconds, preferably may be comprised between 1 second and 10 seconds.

For example, starting from (the value of) the period of time of application of the electrical potential difference (predetermined and preset or settable in the memory unit of the electronic control unit 95), (the value of) the electrical resistance defined by the product P (detected starting from the signal generated by the sensor S3), and by (the value of) the difference between the storage temperature and the service temperature, the electronic control unit may be configured to calculate (the value of) the potential difference to be applied to the first electrode 85 and to the second electrode 90.

For example, the electronic control unit 95 may first of all be configured to calculate (the value of) the temperature difference between (the value of) the storage temperature and (the value of) the service temperature.

For example, (the value of) the storage temperature may be predetermined or preset or settable in the memory unit of the electronic control unit.

Alternatively, the electronic control unit 95 may be configured to detect (the value of) the storage temperature by means of the first sensor S1 when the dosed amount of product P enters the dosing tank 30 before being heated.

The electronic control unit 95 can then be configured to calculate (the value of) the amount of energy (expressed in Kcal or derived quantity) that needs to be supplied to the amount of product P to bring it to the service temperature as the product between (the value of) the above calculated difference (between the service temperature and the storage temperature), the (value of) specific heat of the product P (preset or settable in the memory unit of the electronic control unit 95) and the dosed amount of product P (expressed in Kg or derived quantity, i.e. the mass of the product P contained within the dosing tank 30).

For example, (the value of) the dosed amount of product P (i.e. the mass) may be detected by the electronic control unit 95 through the second sensor S2, or the electronic control unit 95 may be configured to calculate the dosed amount of product P (i.e. the mass) as a product between (the value of) the density of the product P (preset or settable in the memory unit of the electronic control unit 95) and the (value of) volume of the dosed amount of product P (preset or settable in the memory unit of the electronic control unit 95).

After calculating (the value of) the amount of energy in Kcal (or derived quantity, for example multiples or submultiples), the electronic control unit 95 may be configured to convert that amount of energy expressed in Kcal into the corresponding (i.e. into the corresponding value of) amount of electrical energy expressed in Wh (Watt-hour).

To this end, the electronic control unit 95 can be configured to multiply (the value of) the amount of energy expressed in Kcal by a conversion factor (preset or settable in the memory unit of the electronic control unit 95), said conversion factor (between Kcal and Wh) being equal to 1.16.

The electronic control unit 95 can then be configured to calculate (the value of) the power to be supplied to the dosed amount of product P as the ratio between (the value of) the amount of energy calculated above (in Watt-hour) and (the value of) the period of time of application of the electrical potential difference (expressed in hours).

The power (expressed in Watts) is obtained by the product between (the value of) the electrical potential difference (i.e. the value of the voltage, in Volts) and the amount (i.e. intensity, in Amps) of current that crosses the product P.

This amount (i.e. intensity) of current is equal to the ratio between (the value of) the electrical potential difference (i.e. the value of the voltage, in Volts) and (the value of) the electrical resistance (defined by the dosed amount of product P, in Ohms).

The electronic control unit 95 can then be configured to calculate (the value of) the electrical potential difference to be applied (i.e. the value of the electrical voltage) as the square root of the product between (the value of) the power (previously calculated) and (the value of) the electrical resistance (defined by the dosed amount of product P).

Or, starting from (the value of) the electrical potential difference applied (i.e. the voltage value applied) to the first electrode 85 and to the second electrode 90 (predetermined and preset or settable in the electronic control unit 95) , (the value of) the electrical resistance defined by the product P (detected starting from the signal generated by the sensor S3), and by (the value of) the difference between the service temperature and the storage temperature, the electronic control unit can be configured to calculate (the value of) the period of time of application of the electrical potential difference (i.e. the electrical voltage).

For example, the electronic control unit 95 may first of all be configured to calculate (the value of) the temperature difference between the storage temperature and the service temperature.

For example, (the value of) the storage temperature may be predetermined or preset or settable in the memory unit of the electronic control unit.

Alternatively, the electronic control unit 95 may be configured to detect (the value of) the storage temperature starting from the first sensor S1 when the dosed amount of product P enters the dosing tank 30 before being heated.

The electronic control unit 95 can then be configured to calculate (the value of) the amount of energy (expressed in Kcal or derived quantity) that needs to be supplied to the amount of product P to bring it to the service temperature as the product between (the value of) the above calculated difference (between the service temperature and the storage temperature), the (value of) specific heat of the product P (preset or settable in the memory unit of the electronic control unit 95) by the dosed amount of product P (expressed in Kg or derived quantity, i.e. the mass of the product P contained within the dosing tank 30).

For example, (the value of) the dosed amount of product P (i.e. the mass) may be detected by the electronic control unit 95 through the second sensor S2, or the electronic control unit 95 may be configured to calculate the dosed amount of product P (i.e. the mass) as a product between (the value of) the density of the product P (preset or settable in the memory unit of the electronic control unit 95) and the (value of) volume of the dosed amount of product P (preset or settable in the memory unit of the electronic control unit 95).

After calculating (the value of) the amount of energy in Kcal (or derived quantity, for example multiples or submultiples), the electronic control unit 95 may be configured to convert (the value of) that amount of energy expressed in Kcal into the corresponding amount of electrical energy expressed in Wh (Watt-hour).

To this end, the electronic control unit 95 can be configured to multiply (the value of) the amount of energy expressed in Kcal by a conversion factor (preset or settable in the memory unit of the electronic control unit 95), said conversion factor (between Kcal and Wh) being equal to 1.16.

The electronic control unit 95 may then be configured to calculate (the value of) the amount (intensity) of current that crosses the dosed amount of product P as a ratio between (the value of) the potential difference (i.e. the voltage value) and (the value of) the electrical resistance defined by the dosed amount of product P.

The electronic control unit 95 is, still, configured to calculate the power (in Watts) as a product between (the value of) the electrical potential difference (i.e. the voltage value) and (the value of) the amount (i.e. intensity) of current calculated above.

The electronic control unit 95 is, then, configured to calculate (the value of) the period of time of application (expressed in hours) of the electrical potential difference (i.e. of the voltage) as a ratio between (the value of) the electrical energy (in Watt-hour, Wh) and the power (in Watts, W).

Alternatively, the electronic control unit 95 may be configured to operate the electrical power supply 80 (so as to apply the predetermined electrical potential differential and determine said electric current that crosses the dosed amount of product P), monitor (for example continuously, the value of) the temperature of the dosed amount of product P (starting from the signal generated by the first sensor S1), compare (the value of) the detected temperature with (the value of) the service temperature (predetermined and preset or settable in the memory unit of the electronic control unit 95), and terminate the actuation of the electrical power supply 80 when (the value of) the detected temperature is equal to (the value of) the service temperature.

Once the dosed amount of product P has been heated to the service temperature, the electronic control unit 95 is configured to operate the delivery apparatus 10 to deliver the same.

In particular, the electronic control unit 95 may be configured to operate the second valve 75 in the respective opening configuration.

The electronic control unit 95 is then configured to operate the piston 55 from the filling position towards (and into) the delivery position, so that the dosed amount of product P is pushed out of the dosing tank 30 through the delivery mouth, for example made available by the filling mouth 35, (and towards and into the target container 25).

The electronic control unit 95 can be operatively connected to a user interface of the apparatus 10, by wireless technology (e.g. Wi-Fi or Bluetooth or LTE or other wireless communication technology) or by cables, such as for example a remote device, for example a PC or a smart device provided to an operator responsible for controlling the apparatus 10, and which is configured to send information about the activity of the apparatus 10 to said remote device.

For example, said user interface may be in the form of an available or otherwise accessible/obtainable graphical interface (for example after downloading a dedicated computer application) by means of a (i.e. from, via) smart device, such as a smartphone or tablet or a PC or the like.

Via the interface, the electronic control unit 95 can be configured to receive, as input, a plurality of operating parameters of the apparatus 10.

For example, via the interface, the electronic control unit 95 can receive in input (the value of) the service temperature and/or (the value of) the storage temperature and/or (the value of) the potential difference to be applied and/or (the value of) the time of application of the potential difference and/or (the value of) the specific heat of the product P and/or (the value of) the density of the product P and/or (the value of) the dosed amount of product P and/or (the value of) the resistance of the dosed amount of product P.

All the constituent elements described above are common to all the illustrated embodiments, with the exception of the sliding jacket C which is present only in the further embodiment of Figure 5.

In practice, the difference between the various embodiments is represented (only) by the conformation of the electrodes 85,90 and, consequently, by the materials used for realising the various walls of the dosing tank 30 and of the parts (stem 60, pad 65, and possibly jacket C) of the piston 55 with the aim of guaranteeing the electrical connection between the first electrode 85 and the second electrode 90 only through the dosed amount of product P.

The invention thus conceived is susceptible to many modifications and variants, all falling within the same inventive concept.

For example, it is possible to provide that the apparatus 10 can comprise a plurality of dosing and delivery units 20, configured as described above, whose respective dosing tanks 30 are connected to a same source tank 15, and that said dosing and delivery units 20 can share a same electrical power supply 80.

Moreover, all the details can be replaced by other technically equivalent elements.

In practice, the materials used, as well as the contingent shapes and sizes, can be whatever according to the requirements without for this reason departing from the scope of protection of the following claims.

## Claims

1. A unit for dosing and delivering (20) a product (P), comprising:
- a dosing tank (30) adapted to contain a dosed amount of the product (P), the dosing tank (30) being adapted to be connected to a source tank (15) containing an amount of product (P) greater than the dosed amount contained in the dosing tank (30),
- filling means (55,70) associated with the dosing tank (30) and configured to fill the dosing tank (30) with said dosed amount of product (P),
- delivery means (55,75) associated with the dosing tank (30) and configured to deliver the dosed amount of product (P) contained within the dosing tank (30),
- means for heating (80,85,90) the dosed amount of product (P) contained within the dosing tank (30),
wherein said heating means are configured to heat the dosed amount of product (P) by Joule effect, and wherein said heating means comprise:
- an electrical power supply (80),
- a first electrode (85) connected to a first power supply pole (80A) of the electrical power supply (80),
- a second electrode (90) connected to a second power supply pole (80B) of the electrical power supply (80),
wherein the first electrode (85) and the second electrode (90) are associated with the dosing tank (30) so that the amount of product (P) is interposed between the first electrode (85) and the second electrode (90) and in contact therewith,
**characterized in that** said filling means and said delivery means comprise a piston (55) slidingly inserted inside the dosing tank (30) and movable from a filling position wherein said dosed amount of product (P) is allowed to enter inside the dosing tank (30) through a filling mouth (35) thereof, towards a delivery position wherein said dosed amount of product (P) is pushed out of the dosing tank (30) through a delivery mouth (35) thereof.

2. A dosing and delivery unit (20) according to claim 1, wherein the first electrode (85) comprises the piston (55), the piston (55) being made of an electrically conductive material, and wherein the second electrode (90) comprises a wall (A) of the dosing tank (30) made of an electrically conductive material.

3. A dosing and delivery unit (20) according to claim 1, wherein the first electrode (85) and the second electrode (90) each comprise a respective wall (B) of the dosing tank (30), said respective walls being made of an electrically conductive material.

4. A dosing and delivery unit (20) according to claim 1, further comprising an electronic control unit (95) operatively connected to the filling means (55,70), the delivery means (55,75) and the heating means (80,85,90) and configured to operate them.

5. An apparatus for delivering (10) a product (P) comprising:
- a source tank (15) containing the product (P),
- a dosing and delivery unit (20) according to claim 1.

6. A method of delivering a dosed amount of a product (P) at a service temperature comprising:
- having available a source tank (15) of the product (P),
- having available a dosing tank (30) connected to the source tank (15),
- filling the dosing tank (30) with a dosed amount of product (P) taken from the source tank (15) by means of filling means,
- heating by Joule effect the dosed amount of product (P) inside the dosing tank (30) up to a service temperature,
- delivering the dosed amount of product (P) heated to the service temperature contained within the dosing tank by means of delivery means,
wherein said filling means and said delivery means comprise a piston (55) slidingly inserted inside the dosing tank (30) and movable from a filling position wherein said dosed amount of product (P) is allowed to enter inside the dosing tank (30) through a filling mouth (35) thereof, towards a delivery position wherein said dosed amount of product (P) is pushed out of the dosing tank (30) through a delivery mouth (35) thereof.

## Patentansprüche

1. Einheit zum Dosieren und Ausgeben (20) eines Produkts (P), umfassend:
- einen Dosierbehälter (30), der angepasst ist, um eine dosierte Menge an Produkt (P) zu enthalten, wobei der Dosierbehälter (30) angepasst ist, um mit einem Quellbehälter (15) verbunden zu sein, der eine Menge an Produkt (P) enthält, die größer ist als die dosierte Menge, die in dem Dosierbehälter (30) enthalten ist,
- Fülleinrichtungen (55, 70), die mit dem Dosierbehälter (30) assoziiert und konfiguriert sind, um den Dosierbehälter (30) mit der dosierten Menge an Produkt (P) zu füllen,
- Ausgabeeinrichtungen (55, 75), die mit dem Dosierbehälter (30) assoziiert und konfiguriert sind, um die dosierte Menge an Produkt (P) auszugeben, das in dem Dosierbehälter (30) enthalten ist,
- Einrichtungen zum Erwärmen (80, 85, 90) der dosierten Menge an Produkt (P), das in dem Dosierbehälter (30) enthalten ist,
wobei die Erwärmungseinrichtungen konfiguriert sind, um die dosierte Menge an Produkt (P) durch Joule'schen Effekt zu erwärmen, und wobei die Erwärmungseinrichtungen Folgendes umfassen:
- eine elektrische Energieversorgung (80),
- eine erste Elektrode (85), die mit einem ersten Energieversorgungspol (80A) der elektrischen Energieversorgung (80) verbunden ist,
- eine zweite Elektrode (90), die mit einem zweiten Energieversorgungspol (80B) der elektrischen Energieversorgung (80) verbunden ist,
wobei die erste Elektrode (85) und die zweite Elektrode (90) mit dem Dosierbehälter (30) assoziiert sind, sodass sich die Menge an Produkt (P) zwischen die erste Elektrode (85) und die zweite Elektrode (90) eingefügt ist und damit in Kontakt ist,
**dadurch gekennzeichnet, dass** die Fülleinrichtungen und die Ausgabeeinrichtungen einen Kolben (55) umfassen, der gleitend in den Dosierbehälter (30) eingesetzt ist und von einer Füllposition, in der die dosierte Menge an Produkt (P) in den Dosierbehälter (30) durch eine Füllöffnung (35) desselben eintreten kann, in Richtung einer Ausgabeposition, in der die dosierte Menge an Produkt (P) aus dem Dosierbehälter (30) durch eine Ausgabeöffnung (35) desselben herausgedrückt wird, bewegbar ist.

2. Dosier- und Ausgabeeinheit (20) nach Anspruch 1, wobei die erste Elektrode (85) den Kolben (55) umfasst, wobei der Kolben (55) aus einem elektrisch leitenden Material gefertigt ist, und wobei die zweite Elektrode (90) eine Wand (A) des Dosierbehälters (30) umfasst, die aus einem elektrisch leitenden Material gefertigt ist.

3. Dosier- und Ausgabeeinheit (20) nach Anspruch 1, wobei die erste Elektrode (85) und die zweite Elektrode (90) jeweils eine jeweilige Wand (B) des Dosierbehälters (30) umfassen, wobei die jeweiligen Wände aus einem elektrisch leitenden Material gefertigt sind.

4. Dosier- und Ausgabeeinheit (20) nach Anspruch 1, ferner umfassend eine elektronische Steuereinheit (95), die funktionsfähig mit den Fülleinrichtungen (55, 70), den Ausgabeeinrichtungen (55, 75) und den Erwärmungseinrichtungen (80, 85, 90) verbunden und konfiguriert ist, um diese zu betreiben.

5. Vorrichtung zum Ausgeben (10) eines Produkts (P), umfassend:
- einen Quellbehälter (15), der das Produkt (P) enthält,
- eine Dosier- und Ausgabeeinheit (20) nach Anspruch 1.

6. Verfahren zum Ausgeben einer dosierten Menge eines Produkts (P) bei einer Betriebstemperatur, umfassend:
- Verfügbarsein eines Quellbehälters (15) des Produkts (P),
- Verfügbarsein eines Dosierbehälters (30), der mit dem Quellbehälter (15) verbunden ist,
- Füllen des Dosierbehälters (30) mit einer dosierten Menge an Produkt (P), die aus dem Quellbehälter (15) entnommen wird, mittels Fülleinrichtungen,
- Erwärmen, durch Joule'schen Effekt, der dosierten Menge an Produkt (P) in dem Dosierbehälter (30) auf eine Betriebstemperatur,
- Ausgeben der dosierten, auf die Betriebstemperatur erwärmten Menge an Produkt (P) aus dem Dosierbehälter durch Ausgabeeinrichtungen,
wobei die Fülleinrichtungen und die Ausgabeeinrichtungen einen Kolben (55) umfassen, der gleitend in den Dosierbehälter (30) eingesetzt ist und von einer Füllposition, in der die dosierte Menge an Produkt (P) in den Dosierbehälter (30) durch eine Füllöffnung (35) desselben eintreten kann, in Richtung einer Ausgabeposition, in der die dosierte Menge an Produkt (P) aus dem Dosierbehälter (30) durch eine Ausgabeöffnung (35) desselben herausgedrückt wird, bewegbar ist.

## Revendications

1. Unité de dosage et distribution (20) d'un produit (P), comprenant :
- un réservoir de dosage (30) adapté pour contenir une quantité dosée du produit (P), le réservoir de dosage (30) étant adapté pour être lié à un réservoir source (15) contenant une quantité de produit (P) supérieure à la quantité dosée contenue dans le réservoir de dosage (30),
- des moyens de remplissage (55, 70) associés au réservoir de dosage (30) et configurés pour remplir le réservoir de dosage (30) avec ladite quantité dosée de produit (P),
- des moyens de distribution (55, 75) associés au réservoir de dosage (30) et configurés pour distribuer la quantité dosée de produit (P) contenue dans le réservoir de dosage (30),
- de moyens de chauffage (80, 85, 90) permettant de chauffer la quantité dosée de produit (P) contenue dans le réservoir de dosage (30),
dans laquelle lesdits moyens de chauffage sont configurés pour chauffer la quantité dosée de produit (P) par effet Joule, et dans laquelle lesdits moyens de chauffage comprennent :
- une alimentation électrique (80),
- une première électrode (85) connectée à un premier pôle d'alimentation (80A) de l'alimentation électrique (80),
- une deuxième électrode (90) connectée à un deuxième pôle d'alimentation (80B) de l'alimentation électrique (80),
dans laquelle la première électrode (85) et la deuxième électrode (90) sont associées au réservoir de dosage (30) de telle sorte que la quantité de produit (P) soit intercalée entre la première électrode (85) et la deuxième électrode (90) et en contact avec celles-ci, **caractérisée en ce que** ledit moyen de remplissage et ledit moyen de distribution comprennent un piston (55) inséré de manière coulissante à l'intérieur du réservoir de dosage (30) et mobile depuis une position de remplissage dans laquelle ladite quantité dosée de produit (P) peut entrer à l'intérieur du réservoir de dosage (30) par une ouverture de remplissage (35) de celui-ci, vers une position de distribution dans laquelle ladite quantité dosée de produit (P) est poussée hors du réservoir de dosage (30) par une ouverture de distribution (35) de celui-ci.

2. Unité de dosage et de distribution (20) selon la revendication 1, dans laquelle la première électrode (85) comprend le piston (55), le piston (55) étant constitué d'un matériau électriquement conducteur, et dans laquelle la deuxième électrode (90) comprend une paroi (A) du réservoir de dosage (30) constituée d'un matériau électriquement conducteur.

3. Unité de dosage et de distribution (20) selon la revendication 1, dans laquelle la première électrode (85) et la deuxième électrode (90) comprennent chacune une paroi respective (B) du réservoir de dosage (30), lesdites parois respectives étant réalisées en un matériau électriquement conducteur.

4. Unité de dosage et de distribution (20) selon la revendication 1, comprenant en outre une unité de commande électronique (95) reliée de manière opérationnelle aux moyens de remplissage (55, 70), aux moyens de distribution (55, 75) et aux moyens de chauffage (80, 85, 90) et configurée pour les faire fonctionner.

5. Appareil de distribution (10) d'un produit (P) comprenant :
- un réservoir source (15) contenant le produit (P),
- une unité de dosage et de distribution (20) selon la revendication 1.

6. Procédé de distribution d'une quantité dosée d'un produit (P) à une température de service, comprenant :
- la disponibilité d'un réservoir source (15) du produit (P),
- la disponibilité d'un réservoir de dosage (30) relié à un réservoir source (15),
- le remplissage du réservoir de dosage (30) avec une quantité dosée de produit (P) prélevée du réservoir source (15) à l'aide d'un moyen de remplissage,
- le chauffage par effet Joule de la quantité dosée de produit (P) à l'intérieur du réservoir de dosage (30) jusqu'à une température de service,
- la distribution de la quantité dosée de produit (P) chauffée à la température de service contenue dans le réservoir de dosage au moyen d'un dispositif de distribution, dans lequel ledit dispositif de remplissage et ledit dispositif de distribution comprennent un piston (55) inséré de manière coulissante à l'intérieur du réservoir de dosage (30) et mobile depuis une position de remplissage dans laquelle ladite quantité dosée de produit (P) peut entrer à l'intérieur du réservoir de dosage (30) par une ouverture de remplissage (35) de celui-ci, vers une position de distribution dans laquelle ladite quantité dosée de produit (P) est poussée hors du réservoir de dosage (30) à travers une ouverture de distribution (35) de celui-ci.
